# EUROPÄISCHE PATENTANMELDUNG

(11) **EP 1 137 241 A2**
(43) Veröffentlichungstag der Anmeldung: **26.09.2001**
(21) Anmeldenummer: 01106921.8
(22) Anmeldetag: 20.03.2001
(51) Int. Cl.: H04M 3/22, H04Q 3/62

(54) **Anschlussorganbaugruppe für eine digitale Nebenstellenanlage**

(30) Priorität: 21.03.2000 DE 10013880
(71) Anmelder: Tenovis GmbH & Co. KG, 60362 Frankfurt am Main (DE)
(72) Erfinder: Sinn, Thomas, 61191 Rosbach V. d. h. (DE)
(74) Vertreter: Leson, Thomas Johannes Alois, Dipl.-Ing.

(57) **Zusammenfassung**

Die Erfindung betrifft eine Anschlussorganbaugruppe für eine digitale Nebenstellenanlage, welche einen nach außen geführten Anschluss an eine Schnittstelle zum Mikrocontroller der Anschlussorganbaugruppe aufweist. Die Schnittstelle ist vorzugsweise seriell und auf TTL-Pegel. Für Diagnosezwecke kann über Zwischenschaltung eines Spannungskonverters extern ein ASCII-Bedienterminal angeschlossen werden.

## Beschreibung

### Technisches Gebiet

Die Erfindung betrifft eine Anschlussorganbaugruppe für eine digitale Nebenstellenanlage, enthaltend einen Mikrocontroller.

### Stand der Technik

Anschlussorganbaugruppen der eingangs genannten Art werden in großer Stückzahl für digitale Nebenstellenanlagen, auch PBX-Systeme (Private Branch Exchange) genannt, hergestellt. Aus Gründen der Kostenersparnis sind sie dabei so konzipiert, dass sie nur die notwendigsten Funktionen beherrschen. Daher wird insbesondere auf die Bereitstellung besonderer Servicehilfsmittel zur Fehlersuche auf jeder Baugruppe verzichtet. Dies macht es jedoch im Falle eines Fehlers in der Nebenstellenanlage schwer, diesen Fehler zu finden und zu beseitigen.

### Darstellung der Erfindung, Aufgabe, Lösung, Vorteile

Aufgabe der vorliegenden Erfindung war es daher, eine kostengünstige Anschlussorganbaugruppe bereitzustellen, welche verbesserte Möglichkeiten zur Fehlersuche und Wartung bietet.

Diese Aufgabe wird gemäß Anspruch 1 durch eine Anschlussorganbaugruppe für eine digitale Nebenstellenanlage (PBX-System) gelöst, welche einen Mikrocontroller enthält und welche dadurch gekennzeichnet ist, dass sie einen im eingebauten Zustand der Anschlussorganbaugruppe extern zugänglichem Anschluss zu einer Schnittstelle zum Mikrocontroller aufweist. Eine derartige Anschlussorganbaugruppe erlaubt es, über die Schnittstelle von außen auf den Mikrocontroller der Baugruppe zuzugreifen und hier entsprechende Routinen aufzurufen und/oder zum Ablauf zu bringen sowie von dort Daten zu empfangen. Auf diese Weise kann von außen die Funktion des Mikrocontrollers und damit der Anschlussorganbaugruppe kontrolliert werden, ohne dass hierfür besondere technische Einrichtungen oder Servicehilfsmittel auf der Anschlussorganbaugruppe selbst notwendig wären. Demgemäß wird nicht die Anschlussorganbaugruppe mit aufwendiger Hardware zur Fehlerbehandlung versehen, sondern eine solche Hardware ist vielmehr nur einmal extern beim Wartungsdienst erforderlich und kann im Bedarfsfalle über den zugänglichen Anschluss der Baugruppe dort unmittelbar angeschlossen werden.

Der Mikrocontroller ist dabei vorzugsweise so eingerichtet, dass über die Schnittstelle eine Fehlersuche und Wartung ausgeführt werden kann. Das heißt, dass der Mikrocontroller eine Kommunikation über die Schnittstelle ermöglicht und dabei den Zugriff auf für die Fehlersuche und Wartung interessante Informationen ermöglicht. Weiterhin kann der Mikrocontroller in einem Speicher Programmroutinen enthalten, welche zur Fehlersuche und Wartung aufgerufen und auf dem Mikrocontroller ausgeführt werden können. Somit lässt sich z.B. auf dem Mikrocontroller eine Selbstdiagnose aufrufen, welche die ermittelten Daten über die Schnittstelle nach außen sendet.

Bei der genannten Schnittstelle handelt es sich vorzugsweise um eine serielle Schnittstelle. Diese lässt sich mit verhältnismäßig geringem und daher kostengünstigem Hardwareaufwand realisieren. Häufig enthalten die auf der Anschlussorganbaugruppe eingesetzten Mikrocontroller bereits die notwendige Logik für eine derartige Schnittstelle, ohne dass diese jedoch ausgenutzt würde.

Die Schnittstelle ist ferner vorzugsweise so eingerichtet, dass sie über TTL (Transistor-Transistor-Logik) Spannungspegel betrieben werden kann. Das hat zur Folge, dass auf dem Weg vom Mikrocontroller zum externen Anschluss keine Spannungsanpassung stattfinden muss, so dass auf eine entsprechende Hardware verzichtet werden kann. Eine gegebenenfalls notwendige Anpassung der Spannung auf einen V24-Pegel kann in einfacher Weise durch einen extern zwischenzuschaltenden Konverter erfolgen. Ein derartiger Konverter muss demnach nur einmal am entsprechenden Diagnosegerät bereitgestellt werden und nicht auf jeder Anschlussorganbaugruppe. Die Verwendung einer seriellen Schnittstelle erlaubt es ferner, einfache und kostengünstige Diagnosegeräte anzuschließen. Es müssen daher keine teueren Messgeräte zum Einsatz kommen, sondern es reicht grundsätzlich schon ein ASCII-Bedienterminal (zum Beispiel VT100).

Im folgenden wird eine Ausführung der Erfindung am Beispiel einer bekannten Anschlussorganbaugruppe beschrieben, welche den Mikrocontroller AM186ES enthält. Dieser Mikrocontroller beinhaltet bereits zwei asynchrone serielle Schnittstellen (UARTs), die in der Regel nicht für Basisfunktionalität der Baugruppe benötigt werden. Erfindungsgemäß wird eine dieser Schnittstellen an eine sehr preiswerte Buchse, die an der Frontieiste der Anschlussorganbaugruppe angeordnet ist, herausgeführt. Hierzu werden nur vier Leitungen benötigt, die die Belegung RxD (Receive Data) TxD, (Transmit Data), GND (Masse) und +5V (Betriebsspannung) aufweisen. Die UART-Signale RxD und TxD haben TTL-Pegel und werden erst extern mit einem von außen aufsteckbaren Pegelkonverter auf V24-Pegel umgesetzt. Der Konverter wird mit der +5V-Spannung betrieben.

Durch eine derartige Anordnung entstehen nur minimale Zusatzkosten auf der Baugruppe. Der Konverter muss nur im Servicefall angeschlossen werden.

Zur Durchführung einer Fehlerdiagnose oder Wartung wird über den Konverter ein ASCII-Terminal an eine Anschlussorganbaugruppe angeschlossen. Daraufhin erkennt das Terminal die entsprechende Baugruppe und bringt ein Debug-Menü zur Anzeige. Der Servicetechniker kann nun über eine menügeführte Bedienung verschiedene Servicefunktionen aktivieren. So kann zum Beispiel bei digitalen Anschlussorganbaugruppen die Signalisierung im D-Kanal eines jeden Ports in dekodierter Form angezeigt werden, es kann eine Bitfehlermessung auf den Leitungen während des normalen Betriebs durchgeführt werden, Kabelparameter wie die Kabellänge können angezeigt werden oder Prüfschleifen können geschlossen werden.

Die Verfügbarkeit der beschriebenen Schnittstelle trägt erheblich zur schnelleren Fehlersuche bei, wobei keine speziellen, teuren Messgeräte angeschlossen werden müssen. Die beschriebenen Funktionen können zu jeder Zeit ohne Beeinträchtigung des Normalbetriebs aufgerufen werden. Nach dem Abziehen des Steckers von der Frontleistenbuchse werden die Servicefunktionen automatisch deaktiviert.

Die Erfindung betrifft eine Anschlussorganbaugruppe für eine digitale Nebenstellenanlage, welche einen nach außen geführten Anschluss an eine Schnittstelle zum Mikrocontroller der Anschlussorganbaugruppe aufweist. Die Schnittstelle ist vorzugsweise seriell und auf TTL-Pegel. Für Diagnosezwecke kann über Zwischenschaltung eines Spannungskonverters extern ein ASCII-Bedienterminal angeschlossen werden.

## Patentansprüche

1. Anschlussorganbaugruppe für eine digitale Nebenstellenanlage, enthaltend einen Mikrocontroller,
**dadurch gekennzeichnet, dass** sie einen im eingebauten Zustand extern zugänglichen Anschluss zu einer Schnittstelle zum Mikrocontroller aufweist.

2. Anschlussorganbaugruppe nach Anspruch 1,
**dadurch gekennzeichnet, dass** der Mikrocontroller so eingerichtet ist, dass über die Schnittstelle eine Fehlersuche und Wartung ausgeführt werden kann.

3. Anschlussorganbaugruppe nach Anspruch 1 oder 2,
**dadurch gekennzeichnet, dass** die Schnittstelle eine serielle Schnittstelle ist.

4. Anschlussorganbaugruppe nach mindestens einem der Ansprüche 1 bis 3,
**dadurch gekennzeichnet, dass** die Schnittstelle so eingerichtet ist, dass sie über TTL-Spannungspegel betrieben wird.
